# EUROPÄISCHE PATENTSCHRIFT

(11) **EP 3 059 127 B1**
(45) Veröffentlichungstag und Bekanntmachung des Hinweises auf die Patenterteilung: **03.10.2018**
(21) Anmeldenummer: 15156063.8
(22) Anmeldetag: 23.02.2015
(51) Int. Cl.: B60R 22/46

(54) **STRAFFERVORRICHTUNG FÜR EINEN SICHERHEITSGURT**
TENSIONING DEVICE FOR A SAFETY BELT
TENDEUR DE CEINTURE DE SÉCURITÉ

(43) Veröffentlichungstag der Anmeldung: 24.08.2016
(73) Patentinhaber: Autoliv Development AB, 447 83 Vårgårda (SE)
(72) Erfinder: Schmidt, Martin, 25337 Elmshorn (DE); Pech, Michael, 22529 Hamburg (DE); Fischer, Christian, 22297 Hamburg (DE)
(74) Vertreter: Müller Verweyen

(56) Entgegenhaltungen:
- DE-A1- 10 010 379
- DE-A1-102009 051 451
- DE-A1-102010 018 513
- US-A1- 2013 062 450

## Beschreibung

Die vorliegende Erfindung betrifft eine Straffervorrichtung für einen Sicherheitsgurt, insbesondere in einem Kraftfahrzeug, nach dem Oberbegriff von Anspruch 1.

Bei Kraftfahrzeugen werden seit vielen Jahrzehnten Sicherheitsgurte verwendet, um die Folgen eines Unfalls auf die Insassen abzumildern. So ist aus der DE 1 101 987 B aus dem Jahr 1961 ein Dreipunkt-Sicherheitsgurt bekannt, wie er heute standard- und vorschriftsmäßig in Kraftfahrzeugen verbaut wird.

Seither wurden passive Sicherheitssysteme in Kraftfahrzeugen kontinuierlich weiterentwickelt, beispielsweise durch Airbags oder Gurtstraffer, welche die Sicherheitsgurte bei einem Unfall vorspannen, bevor der Insasse in das Gurtband eintaucht. Solche Gurtstraffer können beispielsweise über die gleiche Sensorik, welche bei einem Unfall das Auslösen der Airbags steuert, angesteuert werden.

Grundsätzlich besteht die Aufgabe des Gurtstraffers darin, den Gurt bei einem Unfall möglichst schnell zu straffen, ohne dabei Belastungsspitzen auf den per Gurtstraffer gestrafften Sicherheitsgurt auf den Insassen zu übertragen. Bauartbedingt besteht bei den aus dem Stand der Technik bekannten Gurtstraffern das Problem, dass sich die Druckverhältnisse während des Straffvorgangs sehr stark ändern. Insbesondere sehr hohe Druckspitzen können dazu führen, dass Teile der Straffervorrichtung beschädigt werden, oder der Bewegungsablauf der Straffervorrichtung gestört wird. Ferner besteht das Problem, dass, sofern der Sicherheitsgurt mit einer Gurtkraftbegrenzungseinrichtung versehen ist, die Gurtkraft zu Beginn der sich an den Straffvorgang anschließenden kraftbegrenzten Gurtbandauszugsbewegung durch den noch anstehenden Druck in der Straffervorrichtung kurzzeitig auf ein höheres als durch die Kraftbegrenzungseinrichtung definiertes Kraftbegrenzungsniveau ansteigt.

Aus der DE 10 2009 051 451 A1 ist eine Straffervorrichtung für einen Sicherheitsgurt bekannt, bei der ein Gasgenerator auf einen Kolben einwirkt, derart, dass Kugeln entlang eines Rohrs beschleunigt werden und ein mit einer Gurtaufwickelwelle verbundenes Antriebsrad antreiben. Um Druckspitzen zu vermeiden, sind an dem Kolben entlang der Mantelfläche Kanäle bzw. Öffnungen vorgesehen, welche zu Beginn des Straffungsvorgangs verengt sind und sich während des Straffungsvorgangs erweitern.

Nachteilig an einer solchen Konstruktion ist jedoch, dass sie einen relativ hohen Fertigungsaufwand hat, um im weichen Material des Grundkörpers relativ schnell erweiternde Kanäle in den Kolben einzubringen, gleichzeitig aber für eine hinreichend hohe Dichtheit zwischen dem Kolben und dem Druckraum zu sorgen, um eine optimale Impulsübertragung auf die Kugelkette zu ermöglichen.

Aus der DE 10 2010 018 513 A1 ist eine weitere Straffervorrichtung bekannt, bei der der Kolben zweiteilig ausgebildet ist, wobei das der Kugelkette zugewandte Element des Kolbens eine höhere Festigkeit als der Grundkörper des Kolbens aufweist.

Aus der DE 100 10 379 A1, die den Oberbegriff des Anspruchs 1 offenbart, ist ferner ein Sicherheitsgurtsystem mit einem Vorspanner bekannt, bei die Gurtrolle mittels eines pyrotechnisch antreibbaren Kolbens angetrieben wird, welcher bereits einen Kanal an seiner Stirnseite aufweist.

Aufgabe der vorliegenden Erfindung ist es, die aus dem Stand der Technik bekannten Nachteile zu vermindern und eine Gurtstraffungsvorrichtung bereitzustellen, welche sich durch einen verbesserten Schutz vor Druckspitzen auszeichnet.

Die Lösung der Aufgabe erfolgt erfindungsgemäß durch eine Straffervorrichtung mit den Merkmalen des Anspruchs 1. Weitere bevorzugte Ausführungsformen sind den Unteransprüchen, der Beschreibung und den zugehörigen Figuren zu entnehmen.

Zur Lösung der Aufgabe wird gemäß Anspruch 1 vorgeschlagen, dass der Kanal oder mindestens zwei Äste des Kanals an einem inneren, der Durchgangsöffnung zugewandten Ende und an einem der Durchgangsbohrung abgewandten Ende eine unterschiedliche Breite oder eine unterschiedliche Tiefe aufweisen, wobei sich die Tiefe und oder die Breite von radial nach innen nach radial außen vergrößert. Dadurch kann der Vorgang des Aufweitens besser kontrolliert werden, und der Vorgang des Aufweitens des Kanals kann vorteilhaft unterstützt werden.

Der Vorteil der vorgeschlagenen Lösung ist darin zu sehen, dass der Kanal zu Beginn des Straffvorganges einen verengten Querschnitt aufweist, so dass eine hohe Strafferleistung erreicht wird. Der Kanal weitet sich dann durch den im Druckraum während des Straffvorgangs aufgebauten Druck und/oder die damit verbundene Erwärmung und/oder einen damit verbundenen Materialabtrag, so dass der Druck im Druckraum durch den erweiterten Kanal entweichen kann. Aufgrund des erweiterten Kanals können Druckspitzen ohne Nachteile für den Straffvorgang abgebaut werden. Zudem sind keine Ausnehmungen an dem Grundkörper des Kolbens notwendig, so dass hier eine besonders gute und sichere Abdichtung erreicht werden kann. Eine Anordnung des Kanals in der Stirnseite ermöglicht ein kontrolliertes Aufweiten des Kanals und somit eine verbesserte Druckregulation.

Die Durchgangsöffnung ist als Durchgangsöffnung mit einem Durchmesser von mindestens 1 mm ausgebildet, um eine hinreichende Beschleunigung der Massekörper im Rohr zu realisieren und sich nicht durch bei der Druckerzeugung freigesetzte Partikel oder Fragmente des Gasgenerators zuzusetzen. Der Kanal weist mindestens zwei Äste auf, um beim Einsatz eines pyrotechnischen Gasgenerators zur Erzeugung des Drucks im Druckraum ein Verstopfen durch Fragmente des Gasgenerators sicher zu verhindern. Durch die Formgebung des Kanals, die Anzahl der Äste, den Durchmesser des Kanals sowie die Winkellage und Länge der Äste des Kanals kann die Geschwindigkeit des Druckabbaus beeinflusst und abgestimmt werden, um eine möglichst gute Strafferleistung zu erreichen.

Durch eine permanent geöffnete Durchgangsöffnung ist eine gezielte Einleitung des im Gasgenerator erzeugten Gases in den Kanal möglich, so dass sich der Kanal unter dem eingeleiteten Gas gezielt vergrößern kann. Dabei ist die Durchgangsöffnung bevorzugt zentrisch in dem Kolben angeordnet.

Durch die in den abhängigen Ansprüchen aufgeführten Maßnahmen sind vorteilhafte Weiterbildungen und Verbesserungen der im unabhängigen Anspruch angegebenen Vorrichtung möglich.

Besonders bevorzugt ist dabei, wenn ein Größenverhältnis von der Durchgangsbohrung zu dem Kanal etwa 5 zu 1 beträgt.

Dadurch wird ein vorteilhaftes Verhältnis zwischen dem Druckabbau im Ausgangszustand und dem Aufweiten des Kanals erreicht, so dass Druckspitzen im Verlauf des Straffungsvorgangs reduziert werden.

Besonders vorteilhaft ist dabei, wenn die Durchgangsöffnung einen Durchmesser von mindestens 1 mm aufweist, um eine zur Erweiterung des Kanals hinreichend große Gasmenge zuführen zu können und sich nicht durch Partikel oder Fragmente des Gasgenerators zuzusetzen.

Gemäß einer bevorzugten Ausführungsform ist vorgesehen, dass die Äste ungefähr rechtwinkelig zueinander angeordnet sind. Dadurch wird mit einer hohen Sicherheit erreicht, dass nicht beide Äste gleichzeitig durch ein größeres Fragment des Gasgenerators verstopfen.

Alternativ ist vorgesehen, dass die Äste um 180° gedreht zueinander angeordnet sind. Auf diese Art können die Äste besonders einfach und fertigungstechnisch günstig in die Stirnseite eingebracht werden, beispielsweise als eine durchgängige, über die Öffnung hinwegführende, gefräste Nut.

Gemäß einer vorteilhaften Weiterbildung ist dabei vorgesehen, dass der Kanal oder die Äste des Kanals eine Breite und/oder eine Tiefe von mindestens 0,2 mm haben. Dadurch wird ein Verstopfen des Kanals oder der Äste des Kanals durch Fragmente oder Partikel verhindert.

Gemäß einer bevorzugten Ausführungsform ist vorgesehen, dass der Kolben zweiteilig ausgebildet ist, wobei der Kolben einen Grundkörper und einen Deckel aufweist, wobei der Deckel die Stirnseite aufweist und aus einer Zinklegierung ausgeführt ist. Eine Zinklegierung bietet den Vorteil, dass sie zum einen hinreichend hart ist, um eine stabile Anlagefläche für den verschiebbaren Massekörper zu bieten, und zum anderen einen im Vergleich zu anderen Metallen und Metalllegierungen relativ niedrigen Schmelzpunkt aufweist. Dadurch können die Äste der Kanäle bei einer Druckerhöhung im Druckraum besonders einfach Aufschmelzen und sich so erweitern. Besonders vorteilhaft ist dabei eine Zink-Aluminium-Magnesium-Kupferlegierung (Zamac), welche eine hohe Festigkeit, eine gute Verarbeitbarkeit, insbesondere in einem Zinkdruckgussprozess, sowie eine hinreichende Korrosionsbeständigkeit aufweist.

Besonders vorteilhaft ist dabei, wenn der Kanal in dem Deckel aus der Zinklegierung ausgebildet ist. Die Zinklegierung hat zum einen eine relativ hohe mechanische Festigkeit, weist jedoch einen relativ niedrigen Schmelzpunkt auf, so dass ein Aufschmelzen des Kanals und eine damit verbundene Erweiterung begünstigt werden.

Weiterhin ist mit Vorteil vorgesehen, dass der Deckel durch eine umlaufende Formgebung, insbesondere durch eine Sicke, eine Nut oder eine Umspritzung gegenüber dem Grundkörper positioniert ist. Dies schafft Vorteile bei der Zentrierung von dem Deckel zu dem Grundkörper und erleichtert somit eine Verbindung von dem Deckel und dem Grundkörper.

Gemäß einer bevorzugten Ausführungsform ist vorgesehen, dass die Stirnseite des Kolbens, insbesondere der komplette Deckel des Kolbens, in einem Zinkdruckgussverfahren hergestellt ist. Durch ein Zinkdruckgussverfahren kann der Deckel bzw. eine als Stirnseite dienende Einlage kostengünstig in einem Massenfertigungsprozess hergestellt werden. Dabei kann der Kanal bereits im Druckgussverfahren in die Stirnseite eingebracht werden, so dass keine weitere Bearbeitung des Bauteils notwendig ist, was die Herstellungskosten weiter reduziert.

Gemäß einer vorteilhaften Weiterbildung ist vorgesehen, dass der Grundkörper aus einem Kunststoffmaterial, vorzugsweise aus einem thermoplastischen Elastomer, insbesondere Hytrel, oder einem Polyoxymethylen (POM), insbesondere Delrin, besteht. Dadurch lässt sich der Grundkörper zum einen preisgünstig in großen Stückzahlen herstellen und zum anderen eignet sich ein Kunststoffkörper besonders gut, um eine Abdichtung zwischen dem Kolben und dem Rohr zu realisieren. Darüber hinaus gleitet ein Grundkörper aus Kunststoff besonders gut im Rohr und verursacht keine Beschädigungen.

Gemäß einer Weiterbildung ist vorgesehen, dass der Deckel und der Grundkörper miteinander verpresst sind. Dadurch lässt sich auf einfache und kostengünstige Weise eine stabile Verbindung zwischen den beiden Kolbenteilen herstellen.

Alternativ ist mit Vorteil vorgesehen, dass der Deckel und der Grundkörper über Federarme miteinander verbunden sind. Dadurch lässt sich eine einfache und lösbare Verbindung zwischen Deckel und Grundkörper realisieren. Besonders vorteilhaft ist dabei, wenn der Grundkörper und der Deckel über die Federarme miteinander verclipst sind. Somit lässt sich ein zweiteiliger Kolben einfach montieren und durch das Einrasten der Clips lassen sich der Deckel und der Grundkörper sicher und definiert zueinander positionieren.

Ferner ist alternativ vorgesehen, dass der Grundkörper in einem Spritzgussprozess an den Deckel angespritzt wird.

Gemäß einer vorteilhaften Ausführungsform ist vorgesehen, dass die Durchgangsöffnung durch eine Membran verschlossen ist, wobei ein Druckanstieg im Druckraum dazu führt, dass der Steg aufbricht und den Druckraum mit einem hinter dem Kolben gelegenen Raum verbindet. Dabei handelt es sich bei der Membran um eine dünne Membran, die beim Einsatz des Gasgenerators sofort aufreißt und die Durchgangsöffnung freigibt.

Gemäß einer bevorzugten Ausführungsform ist vorgesehen, dass in dem Deckel sowohl ein Überdruckventil als auch ein Steuerungsventil ausgebildet sind. Somit kann entweder ein Zustrom eines im Druckraum unter Druck stehenden Gases zum Kanal freigegeben werden, oder eine zusätzliche Öffnung freigegeben werden, welche nach Art eines Sicherheitsventils zu einem schnellen Druckabbau im Druckraum führt.

Besonders bevorzugt ist dabei, wenn am Kolben parallel zu der Durchgangsöffnung eine Öffnung ausgebildet ist, welche durch einen Steg verschlossen ist, wobei eine Druckerhöhung im Druckraum dazu führt, dass der Steg aufbricht, und der Druckraum über die Öffnung mit einem hinter dem Kolben gelegenen Raum verbindet. Somit kann die eigentliche Druckregulierung über die Durchgangsbohrung und den sich aufweitenden Kanal erfolgen, während die Öffnung als Sicherheitsventil nur dann geöffnet wird, wenn der Druck im Druckraum trotz der Aufweitung des Kanals unzulässig ansteigt.

Gemäß einer vorteilhaften Ausführungsform ist vorgesehen, dass der Steg, der die Öffnung verschließt, in den Deckel integriert ist und aus dem gleichen Material wie der Deckel besteht. Somit kann einfach und kostengünstig bei der Herstellung des Deckels eine Sollbruchstelle in Form des Stegs am Deckel ausgebildet werden. Alternativ kann der Steg auch als zusätzliches Bauteil, insbesondere zwischen dem Grundkörper und dem Deckel, angeordnet sein.

Die Erfindung wird im Folgenden anhand bevorzugter Ausführungsformen unter Bezugnahme auf die beigefügten Figuren erläutert. Dabei zeigt:
- Fig. 1: eine an einem Gurtaufroller angekoppelte Straffervorrichtung mit einem in einem Rohr geführten Kolben;
- Fig. 2: ein Ausführungsbeispiel eines erfindungsgemäßen Kolbens;
- Fig. 3: ein weiteres Ausführungsbeispiel eines erfindungsgemäßen Kolbens sowie das Erweitern des Kanals nach dem Straffvorgang;
- Fig. 4: ein Schnitt durch das Rohr mit einem weiteren Ausführungsbeispiel eines erfindungsgemäßen Kolbens; und
- Fig. 5: ein weiteres Ausführungsbeispiel eines erfindungsgemäßen Kolbens.

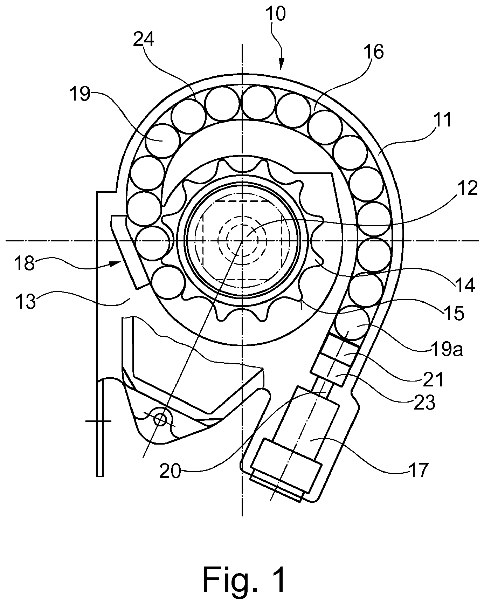

Der in Fig. 1 schematisch dargestellte Gurtaufroller umfasst ein Gehäuse 11 mit einem Seitenschenkel 13, eine darin gelagerte Gurtaufwickelwelle 12 für ein nicht dargestelltes Gurtband und eine nach Auslösung auf die Gurtaufwickelwelle 12 einwirkende Straffervorrichtung 10. Die Straffervorrichtung 10 umfasst ein mit der Gurtaufwickelwelle 12 drehfest verbundenes Antriebsrad 14, das beispielsweise eine Außenverzahnung 15 aufweist, einen insbesondere pyrotechnischen Gasgenerator 17 zur Erzeugung eines Gasdrucks, und ein den Gasgenerator 17 mit der Gurtaufwickelwelle 12 über das Antriebsrad 14 verbindendes Rohr 16. Das Rohr 16 wird von einer Rohrwand 24 gebildet, die als Teil des Gehäuses 11 oder alternativ auch als separates Bauteil ausgebildet sein kann.

In dem Rohr 16 ist eine Antriebseinrichtung in Form von Massekörpern 19 angeordnet, welche insbesondere als metallische Kugeln ausgebildet sind. Die Massekörper 19 übertragen die Straffbewegung über das Antriebsrad 14 auf die Gurtaufwickelwelle 12. Der Gurtaufroller ist hinsichtlich der Ausgestaltung eines Wechselwirkungsbereichs 18 zwischen den Massekörpern 19 und dem Antriebsrad 14 sowie etwaiger Kupplungseinrichtungen zwischen dem Antriebsrad 14 und der Gurtaufwickelwelle 12 nicht beschränkt. Zur reibungsarmen Kraftübertragung ist der Außendurchmesser der Massekörper 19 zweckmäßigerweise etwas geringer als der Innendurchmesser des Rohres 16.

In dem Rohr 16 ist weiterhin ein in Fig. 1 nur schematisch angedeuteter Kolben 21 vorgesehen, der zweckmäßigerweise in einem Bereich 23 zwischen dem Gasgenerator und den Massekörpern 19, d.h. unmittelbar vor dem in Kraftübertragungsrichtung ersten Massekörper 19a der Massekörperreihe 19, angeordnet ist. Der Kolben 21 schließt einen durch den Gasgenerator 17 mit einem Gasdruck beaufschlagbaren Druckraum 20 in dem Rohr 16 ab, so dass der Kolben 21 bei einer Druckbeaufschlagung des Druckraums 20 durch den Gasgenerator 17 zu einer Straffbewegung antreibbar ist. Die Straffbewegung des Kolbens 21 wird durch die Kraftübertragungseinrichtung, in diesem Ausführungsbeispiel gebildet durch die Massekörper 19 und das Antriebsrad 14, auf die Gurtaufwickelwelle 12 übertragen, so dass das Gurtband gestrafft wird.

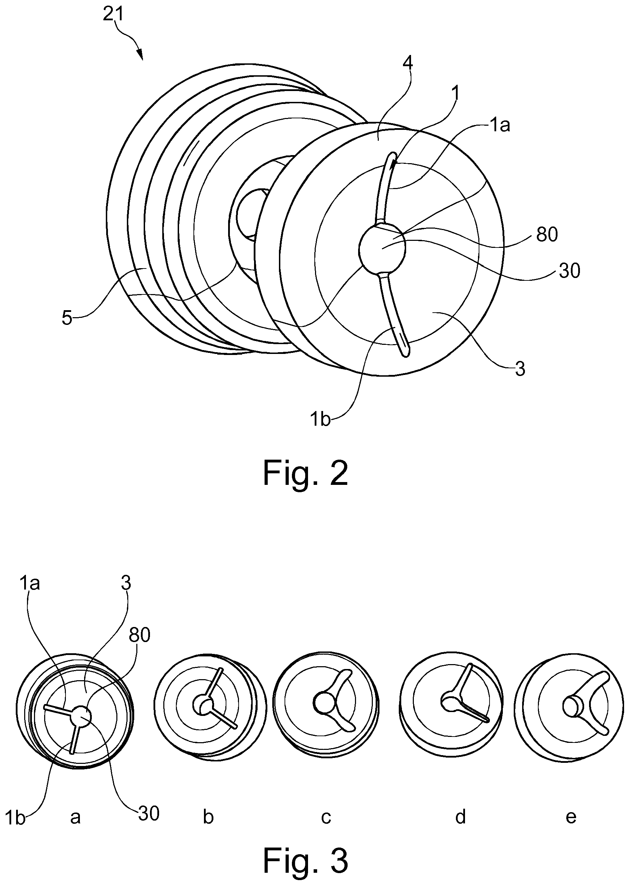

In Fig. 2 ist eine Ausführungsform des Kolbens 21 dargestellt. Der Kolben 21 ist zweiteilig ausgebildet und umfasst einen Grundkörper 5, vorzugsweise aus einem Kunststoff, und einen Deckel 4, vorzugsweise aus einer Zink-Aluminium-Magnesium-Kupferlegierung (ZAMAC), welcher beispielsweise in einem Zinkdruckgussverfahren hergestellt ist. Auf diese Weise weist der Deckel 4 eine größere Härte als der Grundkörper 5 auf. Damit ist der Deckel 4 grundsätzlich auch unter den bei einer Aktivierung des Gasgenerators 17 auftretenden Drücken und Temperaturen formfester als der Grundkörper 5 ausgebildet. Eine den Massekörpern 19 zugewandte Stirnseite 3 des Deckels 4 ist kalottenförmig ausgebildet und weist eine Durchgangsöffnung 80 sowie einen Kanal 1 mit vorzugsweise zwei Ästen la, 1b auf. Die Durchgangsöffnung 80 ist im Deckel 4 des Kolbens 21 ausgebildet. Die Durchgangsöffnung 80 ist bevorzugt auf beiden Seiten offen, kann jedoch auch auf der dem Grundkörper 5 zugewandten Seite der Durchgangsöffnung 80 durch eine Membran 8 verschlossen sein.

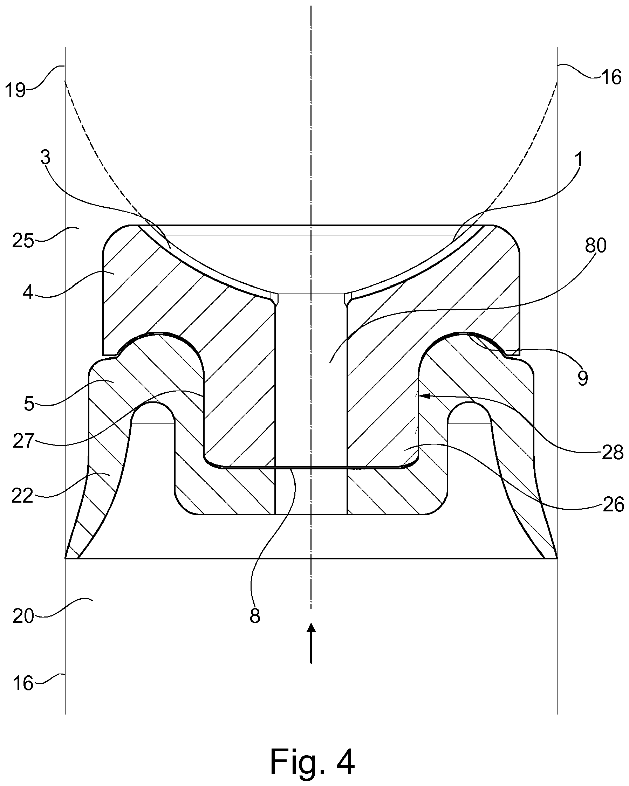

Das durch den Gasgenerator 17 erzeugte Gas strömt in den Druckraum 20 in Richtung der Massekörper 19, wodurch diese in Straffungsrichtung S beschleunigt werden und somit über das Antriebsrad 14 die Gurtaufwickelwelle 12 antreiben. Somit wird das mit der Gurtaufwickelwelle 12 verbundene Gurtband gestrafft. Übersteigt der Druck in dem Druckraum 20 bei der Aktivierung des Gasgenerators 17 einen vorbestimmten Wert, so reißt die Membran 8 auf und gibt die Durchgangsöffnung 80 frei. Das Gas aus dem Gasgenerator 17 bewirkt, dass sich der Kanal 1 an der Stirnseite 3 des Deckels 4 öffnet, wobei durch die Temperatur des Gases die Äste la, 1b "freigebrannt" werden und somit einen Öffnungsquerschnitt vergrößern. Dadurch wird ein weiterer Druckanstieg in dem Druckraum 20 verhindert, indem das freigesetzte Gas aus dem Druckraum in dem in Bewegungsrichtung des Kolbens 21 hinter dem Kolben 21 befindlichen Raum 25 durch die Durchgangsöffnung 80 überströmen kann. Die Durchgangsöffnung 80 sowie der Kanal 1 wirken dabei als ein Steuerungsventil 30, mit dem der Druckverlauf in dem Druckraum 20 gesteuert werden kann. Das Freibrennen der Kanäle 1 ist in Fig. 3 dargestellt, wobei Fig. 3a den Ausgangszustand mit noch geschlossenen Ästen la, 1b des Kanals zeigt, und die Fig. 3b und Fig. 3c sowie Fig. 3d und Fig. 3e jeweils exemplarisch Zwischenstufen (Fig. 3b und Fig. 3d) sowie die Endstufe (Fig. 3c und Fig. 3e) des Öffnens des Kanals 1 zeigen. Dabei zweigen die zwei Äste la, 1b des Kanals 1 entweder, wie in Fig. 3 dargestellt, rechtwinklig von der zentrischen Durchgangsöffnung 80 ab, oder sind, wie in Fig. 2 dargestellt, 180° versetzt zueinander angeordnet. Der Deckel 4 und der Grundkörper 5 des zweiteiligen Kolbens 21 sind kraftschlüssig und/oder formschlüssig miteinander verbunden. So können der Deckel 4 und der Grundkörper 5 beispielsweise miteinander verpresst sein oder über Federarme miteinander verbunden sein. Dabei ist, wie in Fig. 4 dargestellt, auch eine Positionierung zur Montage von dem Deckel 4 zu dem Grundkörper 5 über eine umlaufende Nut, eine Sicke oder eine Umspritzung möglich. Ein Verclipsen der Federarme bietet den Vorteil, dass in der Montage eine zusätzliche gute Positionierung des Deckels 4 zum Grundkörper 5 erfolgen kann und das Einrasten der Clips optisch und/oder akustisch wahrgenommen wird.

In Fig. 4 ist ein weiteres Ausführungsbeispiel einer erfindungsgemäßen Straffervorrichtung 10 mit einem zweiteiligen Kolben 21 dargestellt. Der Kolben 21 weist einen Deckel 4 und einen Grundkörper 5 auf und ist in dem Rohr 16 angeordnet. Dabei trennt der Kolben 21 einen Druckraum 20 von einem in Straffungsrichtung S hinter dem Kolben 21 gelegenen Raum 25. An dem Deckel 4 ist eine Sicke, eine Nut oder eine Umspritzung ausgebildet, welche als eine umlaufende Formgebung 9 die Positionierung von dem Deckel 4 zu dem Grundkörper 5 erleichtern.

An dem Deckel 4 ist ein zylindrischer oder kegelstumpfförmiger Abschnitt 26 mit einer Mantelfläche 28 ausgebildet, welcher mit einer Umfangsfläche 27 am Grundkörper 5 derart verpresst werden kann, dass zwischen dem Deckel 4 und dem Grundkörper 5 eine kraftschlüssige Verbindung entsteht. Der Deckel 4 und der Grundkörper 5 weisen eine zentrische Durchgangsöffnung 80 auf, welche durch eine Membran 8 verschlossen sein kann. An dem Grundkörper 5 ist eine vorzugsweise umlaufende Dichtlippe 22 ausgebildet, welche für eine weitestgehend gasdichte Abdichtung des Druckraums 20 durch den Kolben 21 sorgt. Der Kolben 21 ist im Rohr 16 verschiebbar, wobei der Kontakt zwischen dem Kolben 21 und dem Rohr 16 über die Dichtlippe 22 erfolgt. An einer Stirnseite 3 des Deckels sind die Äste la, 1b des Kanals 1 ausgebildet. Die Stirnseite 3 ist kalottenförmig ausgebildet, so dass ein kugelförmiger Massekörper 19 an der Stirnseite 3 anliegen kann.

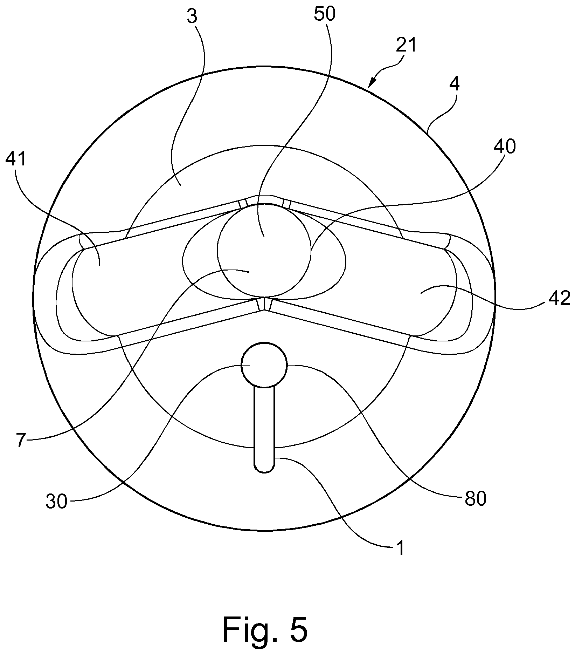

In Fig. 5 ist ein weiteres Ausführungsbeispiel eines erfindungsgemäßen Kolbens 21 der Straffervorrichtung 10 offenbart. Der Kolben 21 ist zweiteilig ausgebildet und umfasst einen nicht dargestellten Grundkörper sowie einen Deckel 4. An dem Deckel 4 ist eine Durchgangsöffnung 80 ausgebildet, welche einen Durchmesser von mindestens 1 mm aufweist und den Druckraum 20 mit einem hinter dem Kolben 21 gelegenen Raum 25 verbindet. Von der Durchgangsbohrung 80 zweigt ein Kanal 1 ab, welcher sich bei einem Auslösen des Gasgenerators 17 unter dem Druck, der Temperatur oder durch Partikel aufweitet. Parallel ist in dem Deckel 4 eine Öffnung 40 ausgebildet, welche von einem Steg 7 verschlossen ist. Von der Öffnung 40 zweigen zwei Entlastungsrinnen 41,42 ab, welche in die Stirnseite 3 des Deckels 4 integriert sind, um ein Ausströmen des Gases auch dann zu ermöglichen, wenn ein Massekörper 19, insbesondere eine Kugel, an der Stirnseite 3 des Deckels 4 anliegt. Die Öffnung 40 ist als Sicherheitsventil 50 ausgelegt, so dass die eigentliche Druckregulierung über die Durchgangsöffnung 80 und den sich aufweitenden Kanal 1 erfolgt, und die Öffnung 40 durch das Aufplatzen des Stegs 7 nur dann freigegeben wird, wenn die Druckregulierung nicht hinreichend ist und es zu einem Druckanstieg im Druckraum 20 über einen definierten Grenzwert hinaus kommt.

## Patentansprüche

1. Straffervorrichtung (10) für einen Sicherheitsgurt, insbesondere in einem Kraftfahrzeug, umfassend:
- einen Gasgenerator (17),
- einen in einem Rohr (16) geführten Kolben (21), der einen Druckraum (20) in dem Rohr (16) verschließt, wobei
- der Druckraum (20) durch den Gasgenerator (17) mit einem Druck beaufschlagbar ist, wobei
- der Kolben (21) durch den in dem Druckraum (20) vorhandenen Druck zumindest mittelbar zu einer Straffbewegung antreibbar ist, wobei
- der Kolben (21) eine, vorzugsweise kalottenförmige, Stirnseite (3) zur Anlage eines im Rohr (16) verschiebbaren Massekörpers (19) aufweist, und wobei
- der Kolben (21) einen verengten Kanal (1) aufweist, welcher durch eine Druckerhöhung im Druckraum (20), durch eine mit einer Druckerhöhung im Druckraum (20) verbundene thermische Einwirkung oder durch einen durch eine Druckerhöhung im Druckraum (20) bewirkten Materialabtrag erweiterbar ist, wobei
- der Kanal (1) an der Stirnseite (3) des Kolbens (21) ausgebildet ist, und
- in dem Kolben (21) eine Durchgangsöffnung (80) vorgesehen ist, von der der Kanal (1) abzweigt, und
- der Kanal (1) mindestens zwei Äste (1a, 1b) aufweist, welche jeweils von der Durchgangsöffnung abzweigen, **dadurch gekennzeichnet, dass**
- der Kanal (1) oder mindestens zwei Äste des Kanals (1a, 1b) an einem inneren, der Durchgangsöffnung (80) zugewandten Ende und an einem der Durchgangsöffnung (80) abgewandten Ende eine unterschiedliche Breite oder eine unterschiedliche Tiefe aufweisen, wobei sich die Tiefe und/oder Breite von radial innen nach radial außen vergrößert.

2. Straffervorrichtung (10) nach Anspruch 1, **dadurch gekennzeichnet, dass**
- ein Größenverhältnis von der Durchgangsöffnung (80) zu dem Kanal (1) etwa 5 zu 1 beträgt.

3. Straffervorrichtung (10) nach einem der Ansprüche 1 oder 2, **dadurch gekennzeichnet, dass**
- die Durchgangsöffnung (80) einen Durchmesser von mindestens 1 mm aufweist.

4. Straffervorrichtung (10) nach einem der vorangegangenen Ansprüche, **dadurch gekennzeichnet, dass**
- die Äste (1a, 1b) ungefähr rechtwinkelig zueinander angeordnet sind, oder dass
- die Äste (1a, 1b) um 180° gedreht zueinander angeordnet sind.

5. Straffervorrichtung (10) nach einem der Ansprüche 1 bis 4, **dadurch gekennzeichnet, dass**
- der Kanal (1) oder die Äste (1a, 1b) des Kanals (1) eine Breite und/oder eine Tiefe von mindestens 0,2 mm haben.

6. Straffervorrichtung (10) nach einem der Ansprüche 1 bis 5, **dadurch gekennzeichnet, dass**
- der Kolben (21) zweiteilig ausgeführt ist, wobei
- der Kolben (21) einen Grundkörper (5) und einen Deckel (4) aufweist, wobei
- der Deckel (4) die Stirnseite (3) aufweist und aus einer Zinklegierung, insbesondere einer Zink-Aluminium-Magnesium-Kupferlegierung (Zamac), ausgeführt ist.

7. Straffervorrichtung (10) nach Anspruch 6, **dadurch gekennzeichnet, dass**
- der Kanal (1) in dem Deckel (4) aus der Zinklegierung ausgebildet ist.

8. Straffervorrichtung (10) nach Anspruch 6 oder Anspruch 7, **dadurch gekennzeichnet, dass**
- der Deckel (4) durch eine umlaufende Formgebung (9) gegenüber dem Grundkörper (5) positioniert ist.

9. Straffervorrichtung (10) nach einem der Ansprüche 6 bis 8, **dadurch gekennzeichnet, dass**
- der Deckel (4) und der Grundkörper (5) miteinander verpresst sind.

10. Straffervorrichtung (10) nach einem der Ansprüche 1 bis 9, **dadurch gekennzeichnet, dass**
- die Durchgangsöffnung (80) durch eine Membran (8) verschlossen ist, wobei ein Druckanstieg im Druckraum (20) dazu führt, dass die Membran (8) aufreißt und den Druckraum (20) nach Überschreiten eines Grenzdrucks mit einem hinter dem Kolben (21) gelegenen Raum (25) verbindet.

11. Straffervorrichtung (10) nach Anspruch 6, **dadurch gekennzeichnet, dass**
- in dem Deckel (4) sowohl ein Überdruckventil (50) als auch ein Steuerungsventil (30) ausgebildet sind.

12. Straffervorrichtung (10) nach einem der vorangegangenen Ansprüche, **dadurch gekennzeichnet, dass**
- parallel zu der Durchgangsöffnung (80) eine Öffnung (40) ausgebildet ist, welche durch einen Steg (7) verschlossen ist, wobei eine Druckerhöhung im Druckraum (20) dazu führt, dass der Steg (7) aufbricht, und den Druckraum (20) nach Überschreiten eines Grenzdrucks mit einem hinter dem Kolben (21) gelegenen Raum (25) verbindet.

## Claims

1. Tensioning device (10) for a seat belt, in particular in a motor vehicle, comprising:
- a gas generator (17),
- a piston (21) which is guided in a tube (16) and closes a pressure chamber (20) in the tube (16), wherein
- the pressure chamber (20) can be charged with pressure by the gas generator (17), wherein
- the piston (21) at least indirectly can be driven to a tensioning movement by the pressure present in the pressure chamber (20), wherein
- the piston (21) includes a preferably calotte-shaped front face (3) to abut against a mass body (19) displaceable in the tube (16), and wherein
- the piston (21) includes a narrowed channel (1) which can be broadened by pressure increase in the pressure chamber (20), by a thermal effect involving pressure increase in the pressure chamber (20), or by material removal caused by pressure increase in the pressure chamber (20), wherein
- the channel (1) is formed on the front face (3) of the piston (21), and
- a through opening (80) is provided in the piston (21), from which the channel (1) branches off, and
- the channel (1) includes at least two branches (1a, 1b), each of which branches off from the through opening (80), **characterised in that**
- the channel (1) or at least two branches of the channel (1a, 1b) have a different width or a different depth at an inner end facing the through opening (80) and at an end turning away from the through opening (80), wherein the depth and/or width increases from radially inward to radially outward.

2. Tensioning device (10) according to claim 1, **characterised in that**
- a size ratio of the through opening (80) to the channel (1) is approximately 5 to 1.

3. Tensioning device (10) according to one of claims 1 or 2, **characterised in that**
- the through opening (80) has a diameter of at least 1 mm.

4. Tensioning device (10) according to any one of the preceding claims, **characterised in that**
- the branches (1a, 1b) are arranged at approximately right angles to each other, or that
- the branches (1a, 1b) are arranged rotated by 180° with respect to each other.

5. Tensioning device (10) according to one of claims 1 to 4, **characterised in that**
- the channel (1) or the branches (1a, 1b) of the channel (1) have a width and/or a depth of at least 0.2 mm.

6. Tensioning device (10) according to one of claims 1 to 5, **characterised in that**
- the piston (21) has a two-part design, wherein
- the piston (21) includes a base body (5) and a cover (4),
wherein
- the cover (4) includes the front face (3) and is formed from a zinc alloy, in particular a zinc-aluminium-magnesium-copper alloy (zamac).

7. Tensioning device (10) according to claim 6, **characterised in that**
- the channel (1) in the cover (4) is formed from the zinc alloy.

8. Tensioning device (10) according to claim 6 or claim 7, **characterised in that**
- the cover (4) is positioned in relation to the base body (5) by a peripheral shaping (9).

9. Tensioning device (10) according to one of claims 6 to 8, **characterised in that**
- the cover (4) and the base body (5) are crimped to each other.

10. Tensioning device (10) according to one of claims 1 to 9, **characterised in that**
- the through opening (80) is closed by a membrane (8),
wherein pressure increase in the pressure chamber (20) causes the membrane (8) to tear open and to interconnect the pressure chamber (20) and a chamber (25) located behind the piston (21) after a limit pressure has been exceeded.

11. Tensioning device (10) according to claim 6, **characterised in that**
- a pressure relief valve (50) as well as a control valve (30) are formed in the cover (4).

12. Tensioning device (10) according to any one of the preceding claims, **characterised in that**
- an opening (40) which is closed by a separator (7) is formed parallel to the through opening (80), wherein pressure increase in the pressure chamber (20) causes the separator (7) to break open and to interconnect the pressure chamber (20) and a chamber (25) located behind the piston (21) after a limit pressure has been exceeded.

## Revendications

1. Dispositif de tension (10) pour une ceinture de sécurité, en particulier dans un véhicule automobile, comprenant :
- un générateur de gaz (17),
- un piston (21) guidé dans un tube (16) qui obture une chambre de pression (20) dans le tube (16), dans lequel
- la chambre de pression (20) peut être mise sous pression par le générateur de gaz (17), dans lequel
- le piston (21) peut être entraîné au moins indirectement vers un mouvement de tension par le biais de la pression présente dans la chambre de pression (20), dans lequel
- le piston (21) présente une face frontale (3) de préférence en forme de calotte pour appuyer un corps de masse (19) déplaçable dans le tube (16), et dans lequel
- le piston (21) présente un canal (1) qui rétrécit et qui peut s'élargir par le biais d'une augmentation de pression dans la chambre de pression (20), par le biais d'une action thermique liée à une augmentation de pression dans la chambre de pression (20) ou par le biais d'un enlèvement de matériau provoqué par une augmentation de pression dans la chambre de pression (20), dans lequel
- le canal (1) est configuré sur la face frontale (3) du piston (21), et
- dans le piston (21), une ouverture de passage (80) est prévue, de laquelle dérive le canal (1), et
- le canal (1) présente au moins deux branches (1a, 1b) qui dérivent chacune de l'ouverture de passage,
**caractérisé en ce que**
- le canal (1) ou au moins deux branches du canal (1a, 1b) présentent, sur une extrémité intérieure en regard de l'ouverture de passage (80) et sur une extrémité opposée à l'ouverture de passage (80), une largeur différente ou une profondeur différente, dans lequel la profondeur et/ou la largeur s'agrandit radialement depuis l'intérieur et radialement vers l'extérieur.

2. Dispositif de tension (10) selon la revendication 1, **caractérisé en ce que**
- un rapport de grandeur de l'ouverture de passage (80) par rapport au canal (1) est d'environ 5 contre 1.

3. Dispositif de tension (10) selon une des revendications 1 ou 2, **caractérisé en ce que**
- l'ouverture de passage (80) présente un diamètre d'au moins 1 mm.

4. Dispositif de tension (10) selon une des revendications précédentes, **caractérisé en ce que**
- les branches (1a, 1b) sont disposées approximativement à angle droit l'une par rapport à l'autre, ou **en ce que**
- les branches (1a, 1b) sont disposées tournées à 180° l'une par rapport à l'autre.

5. Dispositif de tension (10) selon une des revendications 1 à 4, **caractérisé en ce que**
- le canal (1) ou les branches (1a, 1b) du canal (1) ont une largeur et/ou une profondeur d'au moins 0,2 mm.

6. Dispositif de tension (10) selon une des revendications 1 à 5, **caractérisé en ce que**
- le piston (21) est configuré en deux parties, dans lequel
- le piston (21) présente un corps de base (5) et un couvercle (4), dans lequel
- le couvercle (4) présente la face frontale (3) et est réalisé à partir d'un alliage de zinc, en particulier d'un alliage de zinc, d'aluminium, de magnésium et de cuivre (zamac).

7. Dispositif de tension (10) selon la revendication 6, **caractérisé en ce que**
- le canal (1) est configuré dans le couvercle (4) à partir de l'alliage de zinc.

8. Dispositif de tension (10) selon la revendication 6 ou la revendication 7, **caractérisé en ce que**
- le couvercle (4) est positionné par un façonnage périphérique (9) par rapport au corps de base (5).

9. Dispositif de tension (10) selon une des revendications 6 à 8, **caractérisé en ce que**
- le couvercle (4) et le corps de base (5) sont pressés l'un avec l'autre.

10. Dispositif de tension (10) selon une des revendications 1 à 9, **caractérisé en ce que**
- l'ouverture de passage (80) est obturée par une membrane (8), dans lequel une augmentation de pression dans la chambre de pression (20) conduit à ce que la membrane (8) se déchire et relie la chambre de pression (20), après avoir dépassé une pression limite supérieure, à une chambre (25) disposée en aval du piston (21).

11. Dispositif de tension (10) selon la revendication 6, **caractérisé en ce que**,
- dans le couvercle (4), sont configurées aussi bien une soupape de surpression (50) qu'une soupape de commande (30).

12. Dispositif de tension (10) selon une des revendications précédentes, **caractérisé en ce que**,
- parallèlement à l'ouverture de passage (80), une ouverture (40) est configurée, qui est obturée par une traverse (7), dans lequel une augmentation de pression dans la chambre de pression (20) conduit à ce que la traverse (7) se casse et relie la chambre de pression (20), après avoir dépassé une pression limite supérieure, à une chambre (25) disposée en aval du piston (21).
